Europäisches Patentamt

European Patent Office

Office européen des brevets

(11) Numéro de publication: **0 580 533 B1**

(12) **FASCICULE DE BREVET EUROPEEN**

(45) Date de publication du fascicule du brevet: **18.10.95**  (51) Int. Cl.⁶: **A62D 3/00**, B09B 3/00

(21) Numéro de dépôt: **93420313.4**

(22) Date de dépôt: **22.07.93**

(54) **Procédé de traitement thermique de brasquages usés provenant de cuves d'électrolyse Hall-Heroult.**

(30) Priorité: **24.07.92 FR 9209418**

(43) Date de publication de la demande:
**26.01.94 Bulletin 94/04**

(45) Mention de la délivrance du brevet:
**18.10.95 Bulletin 95/42**

(84) Etats contractants désignés:
**CH DE ES GB GR IT LI NL SE**

(56) Documents cités:
**EP-A- 0 307 107**
**EP-A- 0 465 388**
**WO-A-90/13774**
**US-A- 4 444 740**

(73) Titulaire: **ALUMINIUM PECHINEY**
**Immeuble Balzac**
**10, place des Vosges**
**La Défense 5**
**F-92400 Courbevoie (FR)**

(72) Inventeur: **Barrillon, Eric**
**Résidence Saint Mury,**
**Le Berlioz**
**F-38240 Meylan (FR)**
Inventeur: **Personnet, Pierre-Bernard**

**395, rue Georges Clémenceau**
**F-73300 St Jean de Maurienne (FR)**
Inventeur: **Bontron, Jean-Claude**
**Le Nopal,**
**Parc Ste Victoire**
**F-13100 Aix en Provence (FR)**
Inventeur: **Laronze, Daniel**
**Cidex 0728,**
**Hermillon**
**F-73300 St Jean de Maurienne (FR)**

(74) Mandataire: **Mougeot, Jean-Claude et al**
**PECHINEY**
**28, rue de Bonnel**
**F-69433 Lyon Cedex 03 (FR)**

Rank Xerox (UK) Business Services
(3.10/3.09/3.3.3)

## Description

## DOMAINE TECHNIOUE DE L'INVENTION

L'invention concerne un procédé de traitement en réacteur de brasquages usés provenant notamment du démontage de cuves pour la production d'aluminium par électrolyse selon la technique Hall-Heroult. Il convient de rappeler qu'une usine de production d'aluminium de capacité 240000 T/an génère environ 4000 T/an de brasquages usés qui sont constitués par les blocs cathodiques carbonés, les joints et les garnissages latéraux réalisés en pâte carbonée, mais également par l'ensemble des réfractaires et isolants disposés sur les parois latérales et le fond du caisson métallique formant la cuve d'électrolyse. Après usage, ces produits de garnissage sont fortement imprégnés de produits nocifs, tels que des fluorures sodiques ou sodo-alumineux solubles, et des cyanures qu'il faut insolubiliser ou détruire avant mise en décharge ou réutilisation.

## ETAT DE LA TECHNIOUE

On a déjà décrit des procédés de traitement des vieilles brasques par voie humide comportant un broyage suivi d'une lixiviation par une liqueur alcaline par exemple dans le brevet US 4 052 288 Aluminium Péchiney ou le brevet US 4 113 831 Kaiser.

Ces procédés, qui nécessitent la mise en oeuvre de moyens importants, se limitent au seul traitement des parties carbonées des brasques qu'il convient préalablement de séparer des parties non carbonées formées par les réfractaires et isolants.

On connaît également des procédés de traitement par voie thermique opérant généralement en lit fluidisé et basés soit sur une pyrohydrolyse à plus de 1000° C des brasquages usés selon US 4 065 551 Elkem, ou US 4 113 832 et US 4 116 809 Kaiser, soit sur une simple combustion à l'air ou en atmosphère oxydante des éléments carbonés, à une température d'environ 800° C, suffisante pour décomposer les cyanures sans provoquer de dégagement important des composés fluorés volatils... selon US 4 053 375 Reynolds ou selon l'article de L.C. Blayden et S.G. Epstein, Journal of Metals, Juillet 1984 page 24.

En fait tous les procédés et dispositifs utilisant la voie thermique sont limités dans leurs possibilités par la nature et la composition des brasquages à traiter. En effet, en raison de la fusion de certains composés eutectiques se formant au cours de la combustion, les particules de brasques ont une forte tendance à s'agglomérer. Il devient rapidement impossible d'éviter leur prise en masse et par suite d'entretenir un lit fluidisé et a fortiori un lit dense si la combustion est réalisée par exemple en four tournant à temps de séjour important. Ce phénomène d'agglomération déjà sensible avec les charges de brasques constituées uniquement de produits carbonés est fortement accentué avec les charges contenant des oxydes réfractaires et notamment de la silice dont la teneur pondérale ne doit pas dépasser 3 ou 4 %, comme il ressort de l'article de E.R. Cutshall et L.O. Daley, Journal of Metals, Novembre 1986, page 37 table II.

La variante consistant à réaliser la combustion en réacteur à lit fluide circulant des brasques carbonées en mélange avec un additif constitué d'oxydes réfractaires finement broyés, selon US 4 763 585 OGDEN, permet de limiter les risques de collage superficiel puis d'agglomération des grains. Pour ce faire l'additif doit rester inerte lors de la combustion, c'est-à-dire ni réagir ni fondre au contact des déchets carbonés dans la plage de température choisie généralement de l'ordre de 1000° C. Toutefois, là encore, le problème de l'agglomération n'est résolu que dans la mesure où l'on traite des brasquages carbonés ou du moins des brasquages provenant de garnissages à très faible teneur en silice, donc essentiellement à base d'alumine dont la durée de vie est nettement inférieure à celle des garnissages modernes en silico-alumineux préformés.

Un procédé mis au point par la demanderesse et décrit dans une précédente demande de brevet (EP-A-0465388) permet de traiter sans tri préalable tous les types de brasquage, notamment ceux dont la teneur pondérale en silice peut atteindre 50%, et cela dans des conditions offrant toute sécurité pour l'environnement avec une décomposition totale des cyanures dont la teneur dans les brasquages usés peut atteindre 1% et une insolubilisation quasi complète des fluorures alcalins pouvant représenter jusqu'à 20% de fluor et 20% de sodium en poids.

Ce procédé consiste à chauffer brutalement et pendant un temps très court les brasques usées, à une température suffisante pour permettre la décomposition des cyanures, et de préférence en présence d'un additif pulvérulent réactif, c'est-à-dire susceptible de se combiner chimiquement avec les produits fluorés imprégnant les brasques, pour former des composés stables et insolubles tels que $CaF_2$, les composés binaires, ternaires ou quaternaires de $NaF$, $CaF_2$, $CaO$, $SiO_2$, $Al_2O_3$, $CaSO_4$, $Na_2SO_4$, du type néphéline, haüyne ou autre.

Plus précisément le mélange de brasques broyées avec l'additif pulvérulent, de préférence du kaolin, du CaSO$_4$ anhydre ou hydraté du CaO ou leur mélange, est injecté à la partie supérieure d'un réacteur dans un flux gazeux circulant à une température comprise entre 1100°C et 1800°C et on règle le temps de contact des particules solides du mélange avec le flux gazeux circulant de sorte que les particules atteignent une température d'au moins 750°C avant leur extraction à la base du réacteur avec le flux gazeux. En régime établi on règle la température du flux gazeux mesurée en un point du réacteur sur une valeur de consigne par ajustement du débit pondéral de mélange pulvérulent injecté au sommet du réacteur. En sortie à la base du réacteur on sépare après refroidissement le flux gazeux des particules solides constituant le résidu stabilisé c'est-à-dire le résidu dont les composés nocifs ont été insolubilisés ou détruits.

## PROBLEME POSE

Au cours de la mise en oeuvre à l'échelle industrielle de ce procédé la demanderesse s'est trouvée confrontée à 2 difficultés nouvelles de nature à compromettre l'intérét économique de ce traitement thermique:
- d'une part l'apparition, en régime établi, d'un dépôt adhérent et d'épaisseur croissante de fines particules sur la paroi interne du réacteur lorsque leur température dépasse 1200°C nécessitant de ce fait des arrêts fréquents pour nettoyage donc incompatibles avec le régime de marche prévu initialement.
- d'autre part la présence dans la phase gazeuse refroidie après séparation des particules solides d'une certaine quantité de HF nécessitant l'adjonction d'un coûteux et encombrant dispositif de piégeage par voie humide des vapeurs de HF dans la phase gazeuse avant rejet dans l'atmosphère.

## OBJET DE L'INVENTION

L'analyse de ces 2 problèmes apparemment sans relation a montré en réalité qu'ils résultaient tous les deux d'une même cause: une température trop élevée du flux gazeux dans la partie supérieure du réacteur pourtant refroidie où la paroi interne peut atteindre localement 1200°C. Cette température élevée provoque d'une part le collage des fines particules entraînées dans le flux gazeux animé d'un mouvement tourbillonnaire et restant en contact prolongé avec la paroi à plus de 1100°C, d'autre part un début de pyrohydrolyse des fluorures alcalins en acide fluorhydrique par la vapeur d'eau provenant de l'humidité résiduelle des brasques usées dont la teneur peut atteindre 2% en poids selon la durée et les conditions de stockage. Cette réaction de pyrohydrolyse à 1100°C peut se poursuivre immédiatement à la sortie du réacteur quand le flux gazeux entre en contact à plus de 1000°C avec l'atmosphère saturée générée par le bac de rétention à eau placé sous le réacteur.

La solution apportée par la demanderesse a consisté en priorité non pas à agir directement sur la température des gaz de combustion au niveau de l'injecteur mais à accroître le débit pondéral du mélange pulvérulent alimentant l'injecteur afin d'abaisser à moins de 1100°C la température du flux gazeux circulant dans la chambre de réaction.

Contre toute attente, en dépit de l'augmentation importante des quantités de cyanures et de fluorures introduites dans le réacteur par le quasi doublement du débit pondéral de mélange pulvérulent, les excellents taux de dépollution enregistrés avec le procédé de base ont été non seulement conservés mais améliorés dans le procédé présentement revendiqué.

Plus précisément l'invention concerne un procédé de traitement thermique, après broyage, des brasquages usés provenant notamment des cuves d'électrolyse Hall-Héroult et en présence d'un additif pulvérulent sous forme d'un mélange intime des brasquages broyés, constitués à la fois de produits carbonés et de produits silico-alumineux imprégnés de composés minéraux fluorés, et de l'additif minéral pulvérulent susceptible de se combiner à chaud, avec ou sans fusion, avec les composés fluorés d'imprégnation pour former de nouveaux composés stables et insolubles caractérisé en ce que:
  . On injecte ledit mélange de brasquages broyés à une taille de particule inférieure à 5 mm avec l'additif dont la taille des particules est inférieure ou égale à 1 mm, dans un flux gazeux circulant à la partie supérieure d'un réacteur à une température T comprise entre 700°C et 1100°C.
  . On règle entre 0,3 et 3 secondes le temps de contact des particules solides du mélange avec le flux gazeux circulant à une vitesse d'au moins 1 m/seconde, de telle sorte que lesdites particules atteignent une température t comprise entre 400°C et 750°C avant leur extraction de la base du réacteur avec le flux gazeux.

. On maintient la température du flux gazeux, mesurée à la base du réacteur, à une valeur de consigne To telle que T > To ≥ t.

. En sortie de réacteur, après refroidissement, on sépare les particules solides constituant le résidu stabilisé, du flux gazeux qui est dépoussiéré avant rejet à l'atmosphère.

La caractéristique essentielle du procédé selon l'invention repose sur le constat qu'il est possible de réaliser, sans prise en masse de la charge de brasquage usés consécutive à une éventuelle fusion des particules, les réactions de dépollution consistant à détruire les cyanures et à insolubiliser les composés fluorés d'imprégnation par recombinaison chimique notamment avec l'additif en mettant brutalement en contact pendant un temps très court, de l'ordre de 0,3 à 3 secondes, les particules solides du mélange avec un flux gazeux à une température T comprise entre 700 et 1100° et de préférence entre 800°C et 1000°C. Le flux gazeux chaud est le produit de la combustion d'un gaz carburant tel que méthane, butane ou gaz naturel, en présence d'air, d'oxygène ou leur mélange. Le choc thermique ainsi créé permet la décomposition des cyanures et la recombinaison des agents fluorés d'imprégnation quasi instantanément alors que la température dans les particules solides reste inférieure à celle du flux gazeux donc comprise entre 400°C et 750°C de préférence entre 450°C et 700°C. Le ramollissement éventuel des particules solides par fusion partielle, lié notamment à la formation de composés eutectiques fusibles, n'est pas gênant dans la mesure où l'on empêche tout contact prolongé et donc tout collage entre particules en créant une agitation suffisante dans la chambre de réaction. Cette agitation est obtenue en réglant la vitesse du flux gazeux à une valeur suffisante, au moins 1m/seconde à la température de traitement considérée.

En plus de la température T et de la vitesse du flux gazeux conditionnées par le réglage des débits de gaz comburant et carburant, il convient aussi de fixer le temps de séjour moyen des particules dans la chambre de réaction. La plage retenue de 0,3 à 3 secondes est le meilleur compromis pour un traitement efficace de brasques de composition très différentes, dans la limite de teneurs maximales acceptables (Na ≤ 20% et Si ≤ 25%), nécessitant un échauffement des particules du mélange à une température t de préférence comprise entre 450°C et 700°C pour assurer une cinétique suffisante des réactions de recombinaison sans provoquer une fusion franche des particules avec risque de prise en masse. Ce temps de séjour des particules est non seulement fonction de la vitesse du flux gazeux circulant mais aussi de paramètres plus technologiques comme les dimensions de la chambre de réaction généralement de forme conique ou cylindro-conique ainsi que la trajectoire du flux gazeux circulant liée au mode d'injection choisi, donc aux caractéristiques de l'injecteur.

L'adaptation des caractéristiques du mélange, en particulier, sa composition et sa granulométrie est aussi essentielle pour la mise en oeuvre du procédé. Ainsi les brasquages usés sont broyés pour obtenir des particules de dimension inférieure à 5 mm et de préférence inférieure à 3 mm. Par ailleurs l'additif minéral pulvérulent mélangé aux brasquages broyés dans la proportion pondérale de 0 à 50% du mélange final et susceptible de se combiner chimiquement avec les produits d'imprégnation, notamment avec les fluorures pour former des composés stables et insolubles, est de préférence du kaolin, du $CaSO_4$ anhydre ou hydraté, de la chaux ou leur mélange, s'agissant de matériaux réactifs peu coûteux et très disponibles. Pour accroître la réactivité de l'additif pulvérulent de granulométrie comprise entre 0 et 1 mm, il convient de le mélanger intimement aux brasquages broyés et une variante dans la préparation du mélange peut consister à introduire l'additif dans les brasquages grossièrement broyés et à terminer le broyage sur le mélange jusqu'à l'obtention de la granulométrie requise pour les particules de brasquage.

Tous ces paramètres ayant été examinés et fixés par l'expérimentation, il s'est avéré dans la mise en oeuvre de l'invention que l'on pouvait contrôler, en continu et avec précision, le traitement thermique de quantités importantes de brasquages usés assurant au procédé une grande fiabilité et une grande souplesse de fonctionnement à l'échelle industrielle. Il est en effet possible au moyen du système échangeur flux gazeux/matière solide, entre l'entrée et la sortie du réacteur, de stabiliser le régime de marche du réacteur par maintien d'une valeur de consigne To de la température du flux gazeux mesurée avant sa sortie de la chambre de réaction à la partie inférieure du réacteur. Il suffit pour cela de modifier en fonction des variations de la température par rapport à la température de consigne To le débit pondéral du mélange pulvérulent injecté dans le réacteur ou éventuellement la température du flux gazeux à la partie supérieure du réacteur par réglage du débit de gaz combustible. Ces modes de contrôle et régulation en continu du traitement thermique des brasquages usés ne sont en fait efficaces que dans la mesure où les dispositifs utilisés, et en particulier le réacteur avec son injecteur, sont bien adaptés comme c'est le cas du dispositif réalisé par les Ets VICARB et employé pour mettre en oeuvre le procédé dans sa version préférée.

Finalement le flux gazeux chargé de particules solides est extrait à la base du réacteur où après refroidissement le flux gazeux est séparé des particules solides formant un résidu insoluble, alors que le flux gazeux dépoussiéré est rejeté directement à l'atmosphère en l'absence de toute trace de gaz fluoré.

4

L'efficacité du traitement d'insolubilisation est contrôlé par prélevement d'échantillons du résidu et lixiviation selon la norme F. X31-210. Les dosages de CN et F sont effectués sur les jus de lixiviation, les teneurs en cyanure et fluor solubilisés rapportées au poids de résidu, devant rester inférieures respectivement à 0,001 % et à 0,05 % - 0,3 % selon les normes nationales en vigueur.

## MISE EN OEUVRE DU PROCEDE

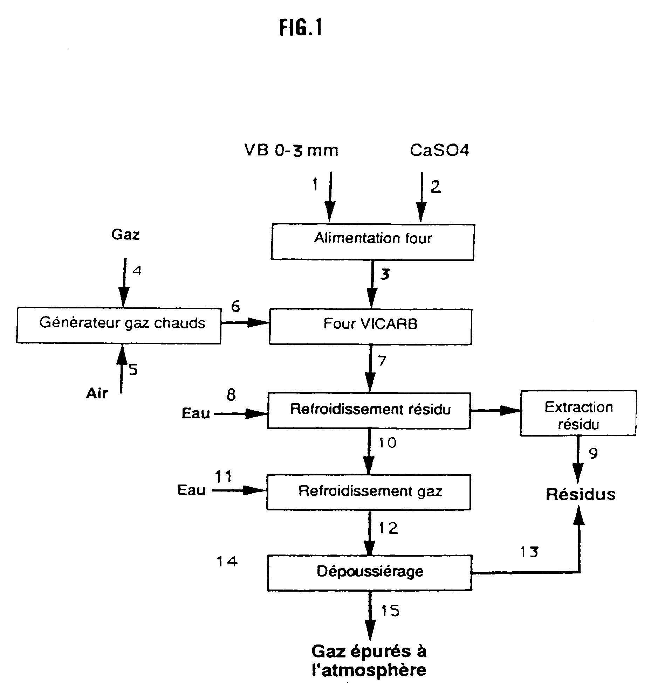

Le procédé sera mieux compris à partir de la description de sa mise en oeuvre dans sa version préférée en s'appuyant sur l'organigramme de la figure 1.

Le mélange pulvérulent contenant au moins 50 % en poids de brasques broyées (1) de granulométrie 0 - 3 mm additionnée de $CaSO_4$ anhydre ou hydraté (2) ou de Kaolin ou de chaux ou de leur mélange, est extrait à la base d'une trémie de stockage par un transporteur-doseur à vis à vitesse de rotation variable. Ce doseur à vis est relié (3) à la partie supérieure d'un réacteur cylindrique type VICARB muni d'un injecteur de gaz, selon modèle breveté (EP 0 171 316), faisant office de générateur de flux gazeux à une température T choisie de préférence entre 800°C et 1000°C par un réglage initial de la combustion du mélange gaz carburant (4) air (5) complété par l'ajustement du débit de mélange pulvérulent qui dans le cas présent peut varier au moyen de la vis à vitesse réglable entre 50 kg/heure et 600 k/heure, pour former avec le flux gazeux une suspension dont la concentration est comprise entre 0,1 et 3 Kg par $Nm^3$ et de préférence entre 0,3 et 2 Kg par $Nm^3$.

Le mélange pulvérulent dosé (3) est injecté au centre d'un vortex formé par le flux de gaz chauds (6) arrivant tangentiellement au sommet de la chambre cylindrique de réaction et animé d'un mouvement tourbillonnaire. Pour obtenir une bonne dispersion des particules du mélange dans le flux gazeux et une bonne agitation la vitesse du flux est réglé à 6 m/seconde et compte tenu des dimensions de la chambre de réaction (diamètre 1 mètre et hauteur 3 mètres) le temps de séjour correspondant est de 0,5 seconde. Selon la température T choisie à l'entrée du réacteur, généralement comprise entre 800°C et 100°C, et pour un temps de séjour moyen de l'ordre de 0,5 seconde des particules solides, dont le débit pondéral peut varier de 50 à 600 kg/h, l'on atteint une température comprise entre 400°C et 750°C et de préférence comprise entre 450°C et 700°C pour ces particules solides avant sortie du réacteur et refroidissement. Parallèlement le contrôle de la température To du flux gazeux mesurée dans la même zone montre que To varie comme t entre 400°C et 750°C selon le régime thermique choisi et conformément à la relation T > To ≥ t. Une fois la valeur de To fixée par exemple 550°C les écarts de température ΔT par rapport à cette valeur de consigne sont corrigés par adaptation du débit de matière pulvérulent injectée au moyen de la vis d'alimentation à vitesse de rotation variable asservie à un dispositif de mesure et d'enregistrement des variations de température d'amplitude supérieure à ± 5°C par rapport à la température de consigne To = 550°C.

Pour limiter le risque de collage des particules sur la paroi intérieure de la chambre de réaction de forme cylindrique dont la température, en cas d'incident de régulation peut localement dépasser 1100°C, il peut être avantageux de procéder à un refroidissement de ces parois par exemple par un balayage à l'air de la paroi externe.

- Le flux gazeux 7 à la sortie du réacteur est séparé des particules solides qui sont refroidies et piègées en tombant dans un bac de rétention 8 à eau placé sous le réacteur dans le prolongement de la chambre de réaction. Après extraction du bac on obtient un 1er résidu solide 9. Le flux gazeux 10 est canalisé vers un dispositif de refroidissement par vaporisation d'eau 11 où il est refroidi 12 aux environs de 200°C avant d'entrer dans un filtre 14 pour être débarrassé de ses poussières 13 qui constituent un 2ème résidu solide, avant rejet à l'atmosphère 15 avec des teneurs en HF et en poussières respectivement inférieures à 1mg/Nm3 et 2 mg/Nm3.

Les 2 résidus solides, issus de la double séparation gaz/solide associée à un double refroidissement, sont mélangés et le résidu final est soumis au contrôle de dépollution, à savoir un contrôle des teneurs en CN et F à partir des échantillons de résidu prélèvés et lixiviés selon la norme Française X 31-210. Ce contrôle indique un taux de cyanure résiduel lixiviable systématiquement inférieur à 0,0005% et un taux de fluor lixiviable n'excédant pas 0,2% et pouvant être abaissé, selon l'additif utilisé dans le mélange, à 0,015%.

## EXEMPLES D'APPLICATION :

Ils concernent 4 compositions de mélanges homogène de 1000 Kg de granulomètrie 0 - 1 mm mettant en oeuvre des brasquages broyés avec les teneurs pondérales suivantes :

| Na% | = 14,0 | F% | = 9,14 |
|-----|--------|-----|--------|
| Si% | = 11,0 | CN% | = 0,08 |

Ces brasquages ont été mélangés successivement avec les additifs suivants :

Exemple 1     $CaSO_4$ anhydre (anhydrite)
Exemple 2     Chaux
Exemple 3     Kaolin + $CaSO_4$ anhydre
Exemple 4     $CaSO_4$ $2H_2O$ (gypse)

Les principales caractéristiques opératoires et les résultats des tests de dépollution sont indiqués dans le tableau 1 ci-après.

- On constate, pour les mêmes compositions de mélange que celles préconisés par l'art antérieur (EP-A-0465388), un meilleur taux de dépollution du résidu notamment avec les mélanges 1, 3 et 4 utilisant comme additifs respectivement $CaSO_4$ anhydre, la combinaison $CaSO_4$ anhydre/kaolin, $CaSO_4$ $2H_2O$, et cela malgré le quasi doublement des débits d'alimentation en mélange et donc des quantités d'impuretés.

A noter que le traitement thermique des brasques dans les conditions de l'invention mais en l'absence d'additif, conduit à un taux de dépollution du résidu nettement insuffisant puisque le taux de F lixiviable reste compris entre 1,5 et 2%, c'est-à-dire au moins 5 fois supérieur aux normes nationales les moins contraignantes.

EP 0 580 533 B1

TABLEAU 1

| EXEMPLES N° | 1 | 2 | 3 | 4 |
|---|---|---|---|---|
| Mélange initial total Kg | 1 000 | 1 000 | 1 000 | 1 000 |
| dont : | | | | |
| Vieilles Brasques Kg | 600 | 600 | 500 | 600 |
| Additif : CaSO4 anhydre Kg | 400 | 0 | 100 | 0 |
| Kaolin Kg | 0 | 0 | 400 | 0 |
| Chaux Kg | 0 | 400 | 0 | 0 |
| Gypse Kg | 0 | 0 | 0 | 400 |
| **Traitement Thermique** | | | | |
| Débit mélange Kg/Heure | 272 | 428 | 214 | 240 |
| Température flux gazeux °C | | | | |
| Haut T | 900 | 1000 | 900 | 900 |
| Bas To | 550 | 550 | 550 | 510 |
| Vitesse flux gazeux m/s | 6 | 6 | 6 | 6 |
| Temps de séjour moyen seconde | 0,5 | 0,5 | 0,5 | 0,5 |
| **Taux de dépollution du résidu** | | | | |
| CN lixiviable total % | <0,0005 | <0,0005 | <0,0005 | <0,0005 |
| F lixiviable total % | 0,015 | 0,20 | 0,04 | 0,03 |

**Revendications**

1. Procédé de traitement thermique, après broyage, des brasquages usés provenant notamment des cuves d'électrolyse Hall-Héroult et en présence d'un additif pulvérulent sous forme d'un mélange intime des brasquages broyés, constitués à la fois de produits carbonés et de produits silico-alumineux imprégnés de composés minéraux fluorés, et d'un additif minéral pulvérulent susceptible de se combiner à chaud, avec ou sans fusion, avec les composés fluorés d'imprégnation pour former de nouveaux composés stables et insolubles caractérisé en ce que:

   . On injecte ledit mélange de brasquages broyés à une taille de particule inférieure à 5 mm avec l'additif dont la taille des particules est inférieure ou égale à 1 mm, dans un flux gazeux circulant à la partie supérieure d'un réacteur à une température T comprise entre 700 ° C et 1100 ° C.

. On règle entre 0,3 et 3 secondes le temps de contact des particules solides du mélange avec le flux gazeux circulant à une vitesse d'au moins 1 m/seconde, de telle sorte que lesdites particules atteignent une température t comprise entre 400°C et 750°C avant leur extraction de la base du réacteur avec le flux gazeux.

. On maintient la température du flux gazeux, mesurée à la base du réacteur, à une valeur de consigne To telle que T > To ≧ t.

. En sortie de réacteur, après refroidissement, on sépare les particules solides constituant le résidu stabilisé, du flux gazeux qui est dépoussiéré avant rejet à l'atmosphère.

2. Procédé selon la revendication 1 caractérisé en ce que les composés fluorés d'imprégnation sont principalement des fluorures alcalins et alcalino-terreux tels que $NaF$, $CaF_2$, $AlF_3$.

3. Procédé selon la revendication 1 caractérisé en ce que dans les brasquages traités les teneurs pondérales maximales en fluor, cyanure, silicium et sodium sont respectivement de 20 %, 1%, 25% et 20%.

4. Procédé selon la revendication 1 caractérisé ce que, la dimension des particules de brasquages usés, après broyage est de préférence inférieure à 3 mm.

5. Procédé selon la revendication 1 caractérisé en ce que la proportion pondérale d'additif dans le mélange varie entre 0 et 50%.

6. Procédé selon l'une quelconque des revendications 1 ou 5, caractérisé en ce que l'additif est de préférence du Kaolin, du $CaSO_4$ anhydre ou hydraté, du $CaO$ ou leur mélange.

7. Procédé selon revendication 1 caractérisé en ce que la température T du flux gazeux formé par les gaz de combustion circulant à la partie supérieure du réacteur est fixée de préférence entre 800°C et 1000°C.

8. Procédé selon revendication 1 caractérisé en ce que la température t des particules à la base du réacteur avant extraction est de préférence comprise entre 450°C et 700°C.

9. Procédé selon revendication 1 caractérisé en ce que le mélange pulvérulent injecté dans le réacteur forme avec le flux gazeux circulant une suspension dont la concentration est comprise entre 0,1 et 3 Kg par $Nm^3$ et de préférence entre 0,3 et 2 kg par $Nm^3$.

10. Procédé selon revendication 1 caractérisé en ce que la température To de consigne est généralement fixée entre 450°C et 700°C.

11. Procédé selon revendication 1 ou 10 caractérisé en ce que le maintien de la température de consigne To est obtenu par ajustement du débit pondéral du mélange pulvérulent injecté dans le flux gazeux à la température T.

12. Procédé selon revendication 11 caractérisé en ce que l'ajustement du débit pondéral du mélange pulvérulent est obtenu par variation de la vitesse de la vis d'alimentation asservie au dispositif de contrôle des écarts $\Delta T$ de température du flux gazeux, à la base du réacteur par rapport à To.

13. Procédé selon revendication 1 ou 10 caractérisé en ce que le maintien de la température de consigne To est obtenu éventuellement par ajustement du débit de gaz combustible conditionnant la température du flux gazeux à débit pondéral constant de mélange pulvérulent.

14. Procédé selon revendication 1 caractérisé en ce que les mélanges pulvérulents sont injectés au centre d'un vortex formé par le flux de gaz chaud circulant arrivant tangentiellement dans le sommet du réacteur et animé d'un mouvement tourbillonnaire.

15. Procédé selon revendication 1 caractérisé en ce que le résidu stabilisé issu du traitement thermique du mélange est obtenu après une double séparation gaz/solide associée à un double refroidissement.

EP 0 580 533 B1

**Claims**

1. A process for the heat treatment, after crushing, of spent pot linings, coming, in particular, from Hall-Héroult electrolysis tanks and in the presence of a powdery additive in the form of an intimate mixture of crushed pot linings constituted both by carbonaceous products ad by silico-aluminium products impregnated with fluorinated mineral compounds, and in the presence of a powdery mineral additive capable of combining in the hot condition, with or without fusion, with the fluorinated impregnation compounds to form new stable, insoluble compounds, characterised in that:

   . said mixture of crushed pot linings with a particle size of less the 5 mm is injected with the additive whose particle size is less than or equal to 1 mm into a gas flow circulating in the upper part of a reactor at a temperature T of between 700 °C and 1100 °C.

   . the contact time of the solid particles of the mixture with the gas flow circulating at a speed of at least 1 m/second is regulated at between 0.3 and 3 seconds in such a way that said particles reach a temperature t of between 400 °C and 750 °C prior to being removed from the bottom of the reactor with the gas flow.

   . the temperature of the gas flow, measured at the bottom of the reactor, is kept at a reference value To such that $T > To \geqq t$.

   . at the outlet from the reactor, after cooling, the solid particles constituting the stabilised residue are separated from the gas flow from which duct is removed prior to its discharge into the atmosphere.

2. A process according to Claim 1, characterised in that the impregnation fluorinated compounds are mainly alkali metal and alkaline-earth metal fluorides, such as $NaF$, $CaF_2$, $AlF_3$.

3. A process according to Claim 1, characterised in that in the treated pot linings the maximum contents by weight of fluorine, cyanide, silicon and sodium are 20%, 1%, 25% and 20% respectively.

4. A process according to Claim 1, characterised in that the particle size of the spent pot linings, after crushing, is preferably less than 3 mm.

5. A process according to Claim 1, characterised in that the amount, by weight, of additive in the mixture varies between 0 and 50%.

6. A process according to any one of Claims 1 or 5, characterised in that the additive is preferably kaolin, anhydrous or hydrated $CaSO_4$, $CaO$ or a mixture thereof.

7. A process according to Claim 1, characterised in that the temperature T of the gas flow formed by the combustion gases circulating in the upper part of the reactor is fixed, preferably at between 800 °C and 1000 °C.

8. A process according to Claim 1, characterised in that the temperature t of the particles at the bottom of the reactor prior to extraction is preferably between 450 °C and 700 °C.

9. A process according to Claim 1, characterised in that the powdery mixture injected into the reactor forms, together with the circulating gas flow, a suspension with a concentration of between 0.1 and 3 kg per $Nm^3$, and of preferably between 0.3 and 2 kg per $Nm^3$.

10. A process according to Claim 1, characterised in that the reference temperature To is usually fixed at between 450 °C and 700 °C.

11. A process according to Claim 1 or Claim 10, characterised in that the reference temperature To is maintained by adjusting the flow rate by weight of the powdery mixture injected into the gas flow to the temperature T.

12. A process according to Claim 11, characterised in that the flow rate by weight of the powdery mixture is adjusted by varying the speed of the feed screw which is controlled by the device for monitoring the temperature differences $\Delta T$ of the gas flow at the bottom of the reactor with respect to To.

9

**13.** A process according to Claim 1 or Claim 10, characterised in that the reference temperature To may be maintained by adjusting the flow rate of the combustible gas which governs the temperature of the gas flow at a constant flow rate by weight of powdery mixture.

**14.** A process according to Claim 1, characterised in that the powdery mixtures are injected in the centre of a vortex formed by the circulating hot, gas flow which arrives tangentially in the top of the reactor and which involves a swirling movement.

**15.** A process according to Claim 1, characterised in that the stabilised residue issuing from the heat treatment of the mixture is obtained after a double gas/solid separation associated with a double cooling operation.

**Patentansprüche**

**1.** Verfahren zur nach einem Mahlvorgang erfolgenden thermischen Behandlung von verbrauchten Auskleidungen, die insbesondere aus Elektrolysegefäßen der Hall-Héroult-Elektrolyse stammen in Anwesenheit eines pulverförmigen Zusatzes, wobei eine innige Vermischung der gleichzeitig aus kohlenstoffhaltigen Produkten und mit fluorierten mineralischen Verbindungen imprägnierten Tonerdesilikatverbindungen bestehenden vermahlenen Auskleidungen mit dem pulverförmigen mineralischen Zusatz vorliegt und dieser bei Hitze mit oder ohne Schmelzvorgang mit den fluorierten Imprägnierverbindungen reagieren kann und neue stabile und unlösliche Verbindungen bildet, gekennzeichnet durch folgende Schritte:
   - das Gemisch aus den zu einer Partikelgröße < 5 mm vermahlenen Auskleidungen und dem Zusatz, dessen Partikelgröße ≦ 1 mm beträgt, wird in einen im oberen Teil eines Reaktors umlaufenden Gasstrom bei einer Temperatur T zwischen 700 und 1100 °C eingespritzt;
   - die Kontaktzeit der festen Partikel der Mischung mit dem Gasstrom, der mit einer Geschwindigkeit von mindestens 1 m/s umläuft, wird auf eine Zeit zwischen 0,3 und 3 Sekunden eingestellt derart, daß die Partikel eine Temperatur t zwischen 400 und 750 °C vor ihrer Entnahme am Boden des Reaktors mit dem Gasstrom erreichen;
   - die am Boden des Reaktors gemessene Temperatur des Gasstroms wird bei einem vorgegebenen Wert To mit der Maßgabe T > To ≧ t gehalten;
   - beim Austritt aus dem Reaktor trennt man nach dem Abkühlen die festen, den stabilisierten Rückstand bildenden Partikel von dem Gasstrom, der vor dem Entlassen in die Atmosphäre von Staub befreit wird.

**2.** Verfahren nach Anspruch 1, dadurch gekennzeichnet, daß die fluorierten Imprägnierverbindungen hauptsächlich Alkali- und Erdalkalifluoride wie NaF, $CaF_2$ und $AlF_3$ sind.

**3.** Verfahren nach Anspruch 1, daß in den der Behandlunng unterzogenen Auskleidungen die maximalen Gewichtsanteile an Fluor, Cyanid, Silicium und Natrium 20 % bzw. 1 % bzw. 25 % bzw. 20 % sind.

**4.** Verfahren nach Anspruch 1, dadurch gekennzeichnet, daß nach dem Vermahlen die Größe der verbrauchten Auskleidungspartikel unter 3 mm ist.

**5.** Verfahren nach Anspruch 1, dadurch gekennzeichnet, daß der Gewichtsanteil des Zusatzes in der Mischung zwischen 0 und 50 % variiert.

**6.** Verfahren nach einem der Ansprüche 1 oder 5, dadurch gekennzeichnet, daß der Zusatz vorzugsweise Kaolin, wasserfreies oder wasserhaltiges $CaSO_4$, CaO oder eine Mischung daraus ist.

**7.** Verfahren nach Anspruch 1, dadurch gekennzeichnet, daß die Temperatur T des Gasstroms, der von dem in dem oberen Teil des Reaktors umlaufenden Brenngas gebildetet wird, vorzugsweise zwischen 800 und 1000 °C festgelegt ist.

**8.** Verfahren nach Anspruch 1, dadurch gekennzeichnet, daß die Temperatur t der Partikel im unteren Teil des Reaktors und vor der Extraktion vorzugsweise zwischen 450 und 700 °C ist.

9. Verfahren nach Anspruch 1, dadurch gekennzeichnet, daß die in den Reaktor eingespritzte Mischung mit dem umlaufenden Gasstrom eine Suspension bildet, deren Konzentration zwischen 0,1 und 3 kg/Nm$^3$ und vorzugsweise zwischen 0,3 und 2 kg/Nm$^3$ liegt.

10. Verfahren nach Anspruch 1, dadurch gekennzeichnet, daß die vorbestimmte Temperatur To allgemein zwischen 450 und 700 °C festgelegt wird.

11. Verfahren nach Anspruch 1 oder 10, dadurch gekennzeichnet, daß die vorbestimmte Temperatur To durch Einstellen des Gewichtsdurchsatzes der bei der Temperatur T in den Gasstrom eingespritzten pulverförmigen Mischung erhalten wird.

12. Verfahren nach Anspruch 11, dadurch gekennzeichnet, daß der Gewichtsdurchsatz der pulverförmigen Mischung durch Variieren der Geschwindigkeit der Förderschnecke eingestellt wird, wobei diese Schnecke von einer Regelvorrichtung der Temperaturabweichungen ΔT des Gasstroms im unteren Teil des Reaktors bezüglich To angesteuert wird.

13. Verfahren nach Anspruch 1 oder 10, dadurch gekennzeichnet, daß die vorbestimmte Temperatur To gegebenenfalls durch Einstellen des Durchsatzes der Brenngase aufrechterhalten wird, der bei konstantem Gewichtsdurchsatz der pulverförmigen Mischung die Temperatur des Gasstroms bestimmt.

14. Verfahren nach Anspruch 1, dadurch gekennzeichnet, daß die pulverförmigen Mischungen in die Mitte einer Spiralwolke eingespritzt werden, die von dem Strom des umlaufenden heißen Gasesgebildet wird, das tangential an der Spitze der Reaktionskammer ankommt und in eine Wirbelbewegung versetzt wird.

15. Verfahren nach Anspruch 1, dadurch gekennzeichnet, daß der stabilisierte Rückstand der thermischen Behandlung der Mischung nach einer mit einer doppelten Abkühlung verbundenen doppelten gasförmig/flüssig-Abtrennung erhalten wird.

## FIG.1

VB 0-3 mm     CaSO4

1     2

Gaz

4

Alimentation four

3

Générateur gaz chauds    6    Four VICARB

5

Air

7

Eau   8   Refroidissement résidu    Extraction résidu

10    9

Eau   11   Refroidissement gaz    Résidus

12

14   Dépoussiérage    13

15

**Gaz épurés à l'atmosphère**